(19)

Europäisches Patentamt

European Patent Office

Office européen des brevets

(11) **EP 4 787 199 A1**

(12) **EUROPEAN PATENT APPLICATION**

(43) Date of publication:
05.08.2026 Bulletin 2026/32

(21) Application number: 25178389.0

(22) Date of filing: 23.05.2025

(51) International Patent Classification (IPC):
*G06F 17/16* (2006.01)     *G06F 7/544* (2006.01)
*G06N 3/063* (2023.01)

(52) Cooperative Patent Classification (CPC):
**G06F 17/16; G06F 7/5443; G06N 3/044;**
**G06N 3/063; G06N 20/00**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: 03.02.2025 KR 20250013022

(71) Applicants:
• NAVER Cloud Corp.
Seongnam-si, Gyeonggi-do 13561 (KR)
• POSTECH Research and Business Development
Foundation
Pohang-si, Gyeongsangbuk-do 37673 (KR)

(72) Inventors:
• LEE, Youngjoo
37673 Pohang-si (KR)

• KIM, Jiwoo
37673 Pohang-si (KR)
• KWON, Hyeokjun
37673 Pohang-si (KR)
• PARK, Gunho
13529 Seongnam-si (KR)
• BAE, Jeongin
13529 Seongnam-si (KR)
• PARK, Baeseong
13529 Seongnam-si (KR)
• LEE, Dongsoo
13529 Seongnam-si (KR)
• KWON, Se Jung
13529 Seongnam-si (KR)
• RYU, Jiwon
13529 Seongnam-si (KR)

(74) Representative: HGF
HGF Limited
4th Floor, 1 City Square
Leeds LS1 2ES (GB)

(54) **HARDWARE ACCELERATOR FOR GENERAL MATRIX OPERATIONS BASED ON LOOKUP TABLES**

(57) A hardware accelerator for general matrix operations based on lookup tables, the accelerator including a weight buffer for storing at least a portion of a weight matrix containing a quantum weight of an integer where a weight of a target model is quantized, an input buffer for storing at least a portion of an input matrix containing input activation values based on a floating point number with respect to the target model, and a matrix processing unit (MPU) for performing a matrix operation between the weight matrix and the input matrix through communication with the weight buffer and the input buffer. The matrix processing unit includes a lookup table generator for obtaining each operation result value and for generating a lookup table containing the operation result value and a plurality of processing elements (PE) for generating a partial sum by extracting the operation result value.

**EP 4 787 199 A1**

**Description**

CROSS REFERENCE TO RELATED APPLICATION

The present application claims priority to Korean Patent Application No. 10-2025-0013022, filed on February 03, 2025, the entire contents of which are hereby incorporated herein by reference for all purposes.

BACKGROUND OF THE INVENTION

Technical Field of the Invention

The present disclosure relates to a hardware accelerator capable of performing general matrix operations between floating point numbers and integers on the basis of a lookup table.

Description of Related Art

The present invention is defined by the independent claim. Further aspects of the present invention are outlined in the dependent claims. Generative language models have gained significant attention in fields such as natural language understanding, natural language generation, inference, and the like. However, generative language models are generally large in scale, which results in many problems in applying them to services. Even practical generative language models have billions of weights, so they are often burdensome in terms of cost, resource requirements, and call time when providing models to users. Thus, there has been extensive research on making practical generative language models lightweight for economical services.

One example of such research is Post Training Quantization. Post training quantization is a method that simplifies a lightweight process by reducing a bit precision of weights to 8 bits or 4 bits without fine-tuning weights of a pre-trained generative language model. This method is attracting attention thanks to the advantages of being simple and having fast processing time.

However, there is a problem in that when quantizing a generative language model, it is common to quantize only weights of the model, in which case the weights are converted into integers by quantization, but input activation values for performing matrix operations with the corresponding weights maintain the existing floating point format.

BRIEF SUMMARY OF THE INVENTION

The present invention relates to a hardware accelerator for general matrix operations based on lookup tables, which can provide a general matrix operation between floating point numbers and integers on the basis of a lookup table.

Examples of the present disclosure relate to a hardware accelerator for general matrix operations based on lookup tables, which can support a wide range of quantization precision while simultaneously reducing computational complexity by utilizing binary code quantization (BCQ).

Examples of the present disclosure relate to a hardware accelerator for general matrix operations based on lookup tables, which can prevent memory bank conflicts by implementing a lookup table based on a flip-flop.

Examples of the present disclosure relate to a hardware accelerator for general matrix operations based on lookup tables, which can reduce memory storage space by utilizing a half lookup table.

Examples of the present disclosure relate to a hardware accelerator for general matrix operations based on lookup tables, which can replace a conventional MAC (Multiply-Accumulate) unit by using a read accumulate unit optimized for operations based on a lookup table.

A hardware accelerator according to an Example of the present disclosure relates to a hardware accelerator for general matrix operations (GEMM: General Matrix Multiply) based on lookup tables (LUTs), the accelerator including a weight buffer for storing at least a portion of a weight matrix containing a quantum weight of an integer where a weight of a target model is quantized, an input buffer for storing at least a portion of an input matrix containing input activation values based on a floating point number with respect to the target model, and a matrix processing unit (MPU) for performing a matrix operation between the weight matrix and the input matrix through communication with the weight buffer and the input buffer, wherein the matrix processing unit comprises a lookup table generator for obtaining each operation result value corresponding to the number of all cases that may occur when performing the matrix operation between the quantum weight and the input activation value, and for generating a lookup table containing the operation result value and a plurality of processing elements (PE) for generating a partial sum by extracting the operation result value corresponding to the quantum weight from the lookup table when performing the matrix operation.

In addition, the means for solving the task described above does not enumerate all the features of the present disclosure. Various features of the present disclosure and the advantages and effects thereof will be understood in more detail with reference to the following specific examples.

With a hardware accelerator for general matrix operations based on lookup tables according to an example of the present disclosure, it is possible to support a wide range of quantization precision while simultaneously reducing computational complexity by utilizing binary code quantization (BCQ).

With a hardware accelerator for general matrix operations based on lookup tables according to an example of the present disclosure, it is possible to prevent memory bank conflicts by utilizing a hardware structure that implements a lookup table based on a flip-flop.

With a hardware accelerator for general matrix operations based on lookup tables according to an example of the present disclosure, it is possible to implement a half lookup table where a size of a lookup table is reduced by half, thereby reducing memory storage space for a lookup table and reducing a required power consumption.

With a hardware accelerator for general matrix operations based on lookup tables according to an example of the present disclosure, it is possible to reduce power consumption and operation delay time by replacing an existing MAC (Multiply-Accumulate) unit and utilizing a read accumulate unit optimized for operations based on a lookup table.

However, the effects achievable by a hardware accelerator for general matrix operations based on lookup tables according to examples of the present disclosure are not limited to those mentioned above, and other benefits not mentioned above can be clearly understood by those skilled in the art to which the present disclosure pertains from the description below.

BRIEF DESCRIPTION OF THE DRAWINGS

FIG. 1 is a block diagram showing a hardware accelerator for general matrix operations based on lookup tables according to an example of the present disclosure.

FIGS. 2A and 2B are block diagrams showing a plurality of read accumulate units included in a processing element according to an example of the present disclosure.

FIG. 3 is a schematic diagram showing a matrix operation between a binary matrix and an input matrix according to an example of the present disclosure.

FIGS. 4A, 4B, and 4C are schematic diagrams showing a lookup table generation and a matrix operation using a lookup table according to an example of the present disclosure.

FIGS. 5A and 5B are schematic diagrams showing a flip-flop-based lookup table generation according to an example of the present disclosure.

FIGS. 6A and 6B are schematic views showing a half lookup table according to an example of the present disclosure.

FIG. 7 is a schematic diagram showing a lookup table generation according to example of the present disclosure.

DETAILED DESCRIPTION OF THE INVENTION

Hereinafter, examples disclosed in the present specification will be described in detail with reference to the accompanying drawings, and the same or similar components will be assigned with the same reference numerals regardless of the drawing symbols, and redundant descriptions thereof will be omitted. The suffixes "module" and "unit" used for components in the following description are assigned or used interchangeably in consideration of only the convenience of writing a specification, and do not in themselves have distinct meanings or roles. That is, the term "unit" used in the present disclosure may refer to software, a hardware component such as an FPGA or an ASIC, and the "unit" performs certain roles. However, the term "unit" is not limited to software or hardware. The "unit" may be configured to be in an addressable storage medium, or may be configured to play one or more processors. Thus, as an example, the "unit" may include components such as software components, object-oriented software components, class components and task components, processes, functions, attributes, procedures, subroutines, segments of program code, drivers, firmware, microcode, circuits, data, databases, data structures, tables, arrays and variables. Functions provided within the components and the "units" may be combined into a smaller number of components and "units" or further divided into additional components and "units".

The terms "processor" or "processing unit" should be interpreted broadly to include a central processing unit (CPU), microprocessor, digital signal processor (DSP), controller, microcontroller, state machine, and the like. Further, the term "memory" should be interpreted broadly to include any electronic component capable of storing electronic information. The "memory" may refer to various types of processor-readable media such as random-access memory (RAM), read-only memory (ROM), nonvolatile random access memory (NVRAM), programmable read-only memory (PROM), erasable-programmable read-only memory (EPROM), electrically erasable PROM (EEPROM), flash memory, magnetic or optical data storage, and registers. A memory is said to be in electronic communication with a processor if the processor can read information from the memory and/or write information to the memory. The memory integrated into a processor is in electronic communication with the processor.

In addition, when describing the examples disclosed in the present specification, the detailed description thereof will be omitted when it is determined that a detailed description of a related known technology may obscure the gist of the examples disclosed in the present specification. In addition, the accompanying drawings are intended only to facilitate understanding of the examples disclosed in the present specification, and the technical idea disclosed in the present specification is not limited by the accompanying drawings, and should be understood to include all modifications, and substitutes included in the technical idea and scope of the present disclosure.

The generative language model may perform a natural language process (NLP), and generate a new sentence corresponding to an input sentence and provide the same as an output sentence. In general, the generative language model can be utilized in various fields such as text generation in STT (Speech-to-Text), translation, chatbots, document summary, question-answering, and the like.

The generative language model may be implemented as a probability model for predicting the next token from a sequence of input tokens corresponding to an input sentence, and can generate an output sentence by of selecting the most likely token through calculating a conditional probability for the next token after learning the sequence of tokens included in the sentence through training data.

The generative language model can be implemented by utilizing a recurrent neural network (RNN), a long short-term memory (LSTM), a gated recurrent unit (GRU), a transformer, and the like, and recently, it has become common to implement a generative language model by using a transformer. There are generative language models such as Generative Pre-trained Transformer (GPT), Bidirectional Encoder Representations from Transformer (BERT), and Text-To-Text Transfer Transformer (T5).

However, there are problems such as requiring significant hardware and energy resources for training and reasoning, and causing difficulties in distribution and maintenance because generative language models are generally very large in scale. Accordingly, it is necessary to make a generative language model lighter for an economical and efficient service, and a method for making lighter has been proposed by quantizing weights of the generative language model.

When quantizing a generative language model, it may be possible to quantize both the weights and the input activation values of the corresponding model, but it may be common to perform quantization only with respect to the weights because of the problems in that the weights account for a large proportion of the size of the generative language model and it is difficult to maintain accuracy when quantizing the input activation values. In this case, the weights may be converted into integers by quantization, but the input activation values that perform matrix operations with the weights may maintain the existing floating point (FP) format, so it may be necessary to perform an FP-INT operation in order to utilize the corresponding generative language model.

Conventionally, there are no physical FP-INT operators on GPUs that execute generative language models, so an acceleration kernel that supports the corresponding operation has been proposed. However, in the case of existing acceleration kernels, there are problems such as memory bank conflicts or inefficient operations according to an application of bit serial techniques.

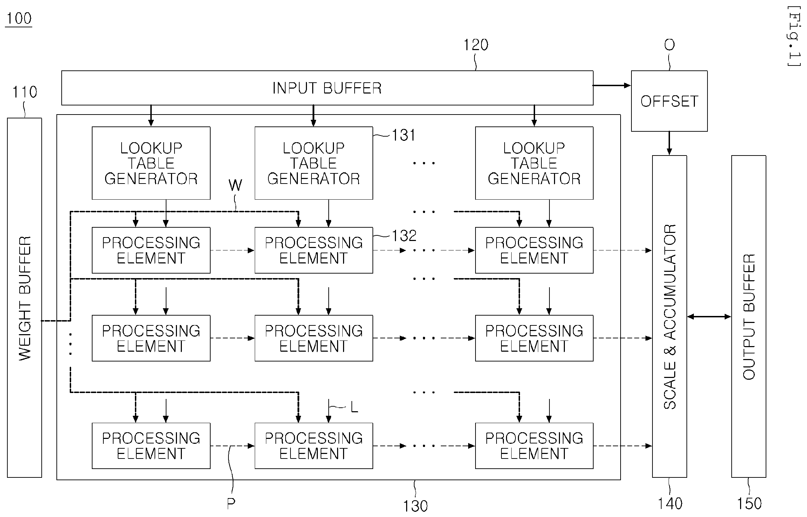

On the other hand, by using a hardware accelerator for general matrix operations based on lookup tables according to an example of the present disclosure, it is possible to increase the efficiency of the bit serial structure through operations based on a lookup table and to solve problems such as memory bank conflicts thanks to including a hardware structure specialized for matrix operations based on a lookup table. Hereinafter, a hardware accelerator according to an example of the present disclosure will be described with reference to FIG. 1.

FIG. 1 is a block diagram showing a hardware accelerator for general matrix operations based on lookup tables according to an example of the present disclosure.

Referring to FIG. 1, a hardware accelerator 100 according to an example of the present disclosure may include a weight buffer 110, an input buffer 120, a matrix processing unit (MPU) 130, a scale & accumulator 140, and an output buffer 150.

The weight buffer 110 may store a weight matrix containing quantum weights (W) of integers where weights of a target model such as a generative language model are quantized. That is, the quantum weights may be generated in advance by quantizing the corresponding target model, and at least some of the corresponding quantum weights may be sequentially provided to and stored in the weight matrix.

In an example, it is also possible to generate a weight matrix by quantizing the weights of the target model on the basis of binary code quantization (BCQ). Herein, when using the binary code quantization, the weights of the target model may be represented as a linear combination of q binary weights (W), in which case each binary weight (W) is multiplied by a scale factor and is added by an offset (O). That is, when performing the binary code quantization, q binary matrices representing one target model can be generated, and q binary matrices containing the corresponding binary weights (W) can be stored as the weight matrix in the weight buffer 110. In this case, each binary weight (W) may be set to {-1, 1} or {0, 1}, so it may be possible to convert matrix operations such as inner products into simple additions or subtractions when applying the binary code quantization.

The input buffer 120 may store an input matrix containing the input activation values based on floating point numbers with respect to the target model. Herein, at least a portion of the input matrix may be sequentially stored in the input buffer 120 for the matrix operations with the weight matrix.

That is, there may be cases where the size of the entire weight matrix for the target model is larger than the capacity of the weight buffer 110 or the size of the input matrix is larger than the capacity of the input buffer 120. In this case, the hardware accelerator 100 may divide the weight matrix or the input matrix of the target model into a tile (i.e., a processable unit) by applying a tiling, and then perform the matrix operations by sequentially loading the corresponding tile into each weight buffer 110 and input buffer 120 until each tile has been processed.

The matrix processing unit 130 may perform the matrix operations between the weight matrix and the input matrix through communication with the weight buffer 110 and the input buffer 120. Herein, when generating quantum weights in the weight buffer 110 through binary code quantization, the matrix operation with the input matrix may be converted into an addition or subtraction between the input activation values. In this case, it may be possible to process with an FP-FP operation when performing the matrix operations instead of performing an FP-INT operation.

In addition, the matrix processing unit 130 may be implemented to perform operations on each input activation value in advance, and to store the same in a lookup table and then to read each operation result from the lookup table instead of performing an actual operation on the input activation values afterwards. Specifically, the matrix processing unit 130 may include a lookup table generator 131 and a plurality of processing elements (PEs) 132.

The lookup table generator 131 may obtain each operation result value corresponding to the number of all cases between the quantum weights and the input activation values that may occur when performing the matrix operations, and generate a lookup table containing the corresponding operation result values.

Herein, the lookup table generator 131 may utilize a hyperparameter ($\mu$) in order to generate a lookup table. The hyperparameter ($\mu$) may be a hyper parameter and may correspond to the number of the binary weight required to generate each key of the lookup table. At this time, as the hyperparameter increases, the number of operations that one lookup table can replace may increase, but as the hyperparameter increases, the size of the lookup table may also increase. That is, as the hyperparameter increases, the memory size occupied by one lookup table may increase, in which case the increase in memory size is exponential. Therefore, it is necessary to optimize and set the hyperparameter.

For example, the binary matrix $B \in \{-1,1\}^{4 \times 6}$ and the input matrix $x \in R^6$ may be generated as follows.

$$
\mathbf{B} = \begin{bmatrix} +1 & -1 & -1 & -1 & -1 & +1 \\ +1 & -1 & -1 & +1 & +1 & -1 \\ -1 & +1 & -1 & -1 & -1 & +1 \\ +1 & -1 & -1 & -1 & -1 & +1 \end{bmatrix}
$$

$$
\mathbf{X} = \begin{bmatrix} x_1 & x_2 & x_3 & x_4 & x_5 & x_6 \end{bmatrix}
$$

Herein, when performing a matrix operation of $B \cdot x^T$, operations such as $(x_1 - x_2 - x_3)$ and $(-x_4 - x_5 + x_6)$ may appear repeatedly when the hyperparameter is 3. In this way, unnecessary repetition of operations may be prevented when the repetitive operations are calculated in advance and stored in the lookup table. In this case, a lookup table may be generated as shown in Table 1 below.

| Binary Patterns | Key | Value |
|---|---|---|
| {-1, -1, -1} | 0 (b'000) | $-x_1 - x_2 - x_3$ |
| {-1, -1, +1} | 1 (b'001) | $-x_1 - x_2 + x_3$ |
| {-1, +1, -1} | 2 (b'010) | $-x_1 + x_2 - x_3$ |
| {-1, +1, +1} | 3 (b'011) | $-x_1 + x_2 + x_3$ |
| {+1, -1, -1} | 4 (b'100) | $+x_1 - x_2 - x_3$ |
| {+1, -1, +1} | 5 (b'101) | $+x_1 - x_2 + x_3$ |
| {+1, +1, -11 | 6 (b'110) | $+x_1 + x_2 - x_3$ |
| {+1, +1, +1} | 7 (b'111) | $+x_1 + x_2 + x_3$ |

That is, it is possible to generate an entire lookup table by setting a key with respect to patterns corresponding to a combination of binary weights and generating values through performing addition and subtraction of the input activation values corresponding to each key.

Herein, it can be seen that the lookup table generator 131 divides the binary matrix into sub-regions containing a column of a hyperparameter ($\mu$) and then generates each lookup table corresponding to the sub-region. In this case, the lookup table generator 131 may assign each key corresponding to the number ($2^\mu$) of all cases combinable with the binary weights of the hyperparameter ($\mu$), and may assign values by generating an operation result for a matrix operation between the binary weight and the input matrix of the hyperparameter corresponding to the key. Thereafter, a lookup table can be generated from each pair of a key and a value.

Meanwhile, referring to FIG. 1, the lookup table generator 131 may be provided for each sub-region, and may generate a lookup table corresponding to the sub-region when an input matrix is input from the input buffer 120. That is, when the hyperparameter ($\mu$) is determined, the lookup table generator 131 may obtain all possible keys ($2^\mu$) according to the corresponding hyperparameter, and generate values corresponding to each key by referring to the input matrix, so each lookup table may be generated without referring to the binary matrix.

A plurality of processing elements 132 may be included in the matrix processing unit 130, and each may generate a partial sum by extracting the operation result values corresponding to the quantum weights from a lookup table when performing a matrix operation. Herein, the plurality of processing elements 132 may be arranged to have a systolic array structure, and may be implemented to input each partial sum of the processing element 132 to another processing element for data accumulation.

Referring to FIG. 1, a lookup table generator 131 may be included for each sub-region, and when a lookup table (L) is generated, the processing elements 131 at the location corresponding to the sub-region within the systolic array structure may share the same lookup table (L) from the lookup table generator 131.

Specifically, the processing element 132 may generate a key from a pattern of the binary weights (W) of the hyperparameter represented in the binary matrix, and may extract the operation result values, the corresponding values, from the lookup table (L) by using the corresponding key. Thereafter, a partial sum (P) may be generated by adding the operation result values to the partial sum (P) transmitted from the previous processing element 132, and the generated partial sum (P) may be transmitted to the next processing element 132. Through this, the partial sum (P) may be accumulated to finally generate the output data. Herein, as shown in FIG. 1, the processing elements 132 may receive and share the lookup table (L) in a column direction and may transmit a partial sum (P) in a row direction.

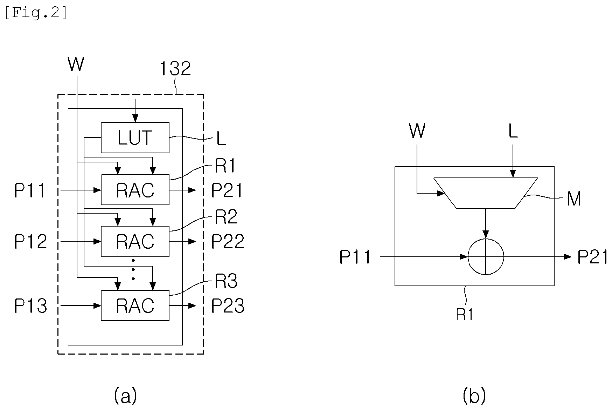

Additionally, referring to FIG. 2A, each processing element 132 may include a plurality of read accumulate units (RACs, R1, R2, R3). Herein, each read accumulate unit (R1, R2, R3) may be provided corresponding to each row assigned to the corresponding processing element, and may generate a partial sum corresponding to the row.

Herein, each read accumulate unit (R1, R2, R3) may share the lookup table (L) of the corresponding processing element 132, and it is possible for the plurality of read accumulate units (R1, R2, R3) to simultaneously access the lookup table (L) for example. Accordingly, the read accumulate units (R1, R2, R3) may simultaneously read the operation results corresponding to the binary weights included in each row from the lookup table (L), and through this, may generate each partial sum corresponding to each row in parallel. Herein, each read accumulate unit (R1, R2, R3) may generate a partial sum (P21, P22, P23) by adding the operation result values when receiving as an input the partial sum (P11, P12, P13) from the previous read accumulate unit, and may transmit the same to the next read accumulate unit.

In addition, referring to FIG. 2B, each read accumulate unit (such as unit R1) may extract an operation result value by using a multiplexer (M). That is, all values contained in the lookup table (L) may be input to the multiplexer (M), and the read accumulate unit (R1) may input a key by using an enable signal of the multiplexer (M) and receive a value corresponding to the key. Herein, the key may be generated from the binary weights (W) of the hyperparameter extracted from the weight matrix, and the partial sum (P12) of the corresponding read accumulate unit (R1) may be generated by adding the extracted operation result value to the previous partial sum (P11).

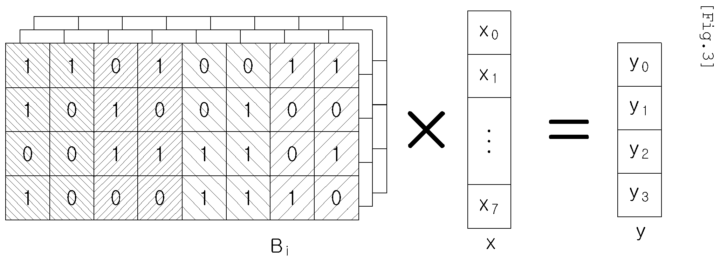

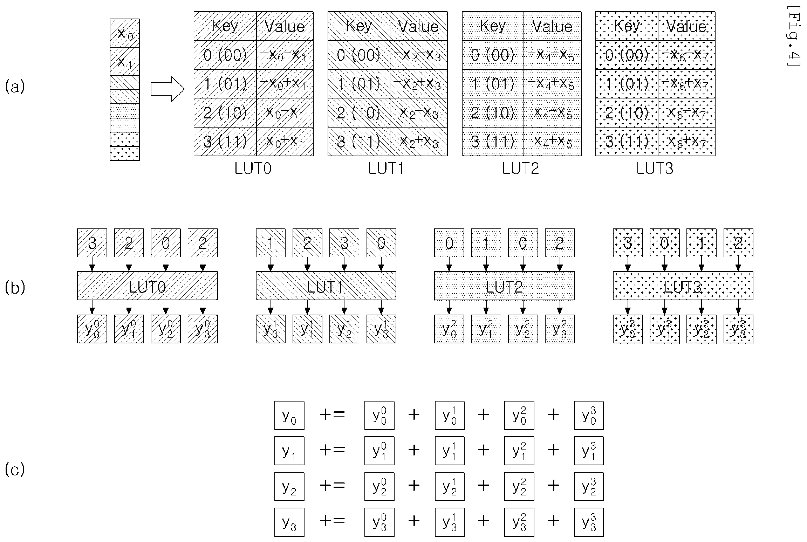

FIG. 3 corresponds to an example showing a case where an output vector y is generated by performing a matrix operation B $\cdot$ $x^T$ between a binary matrix $B_i$ and an input matrix x when the hyperparameter is 2. Herein, the lookup table generator 131 may be viewed as dividing the binary matrix $B_i$ into each sub-region containing two columns, and then generating each lookup table (LUT0, LUT1, LUT2, LUT3) corresponding to each sub-region as shown in FIG. 4A.

Referring to FIG. 4B, it may be seen that a first processing element corresponding to a first lookup table (LUT0) includes four read accumulate units and the remaining lookup tables (LUT1, LUT2, LUT3) include the corresponding processing element and four read accumulate units contained in the corresponding processing element. Accordingly, each read accumulate unit for the first lookup table (LUT0) may receive two binary weights corresponding to each row in the corresponding weight matrix.

Specifically, a first read accumulate unit within the first processing element may receive 3 as a key, and referring to the first lookup table (LUT0), the operation result value corresponding to the value may be $x_0 + x_1$, which corresponds to

$y_0^0$. In the same way, a second read accumulate unit may receive 2 as the key corresponding to the next row, and referring to the first lookup table (LUT0), the value may be $x_0 - x_1$, which corresponds to $y_1^0$.

Herein, the operation result value $y_0^0$ generated by the first read accumulate unit may be transmitted to a second read accumulate unit, and the second read accumulate unit may generate a partial sum by performing $y_0^0 + y_0^1$. The second read accumulate unit may transmit the partial sum to a third read accumulate unit again, and the third read accumulate unit may obtain a partial sum $y_0^0 + y_0^1 + y_0^2$ by adding $y_0^2$ to the corresponding partial sum and transmit the same to a fourth read accumulate unit. Finally, the fourth read accumulate unit may generate a partial sum $y_0^0 + y_0^1 + y_0^2 + y_0^3$ by adding $y_0^3$ to the received partial sum $y_0^0 + y_0^1 + y_0^2$, and referring to FIG. 4C, the last partial sum may correspond to $y_0$ of the output vector. In the same way, the output vectors, $y_1$, $y_2$, and $y_3$, may be obtained respectively by obtaining the partial sums from the remaining processing elements and the output vectors may be finally generated. Herein, each may be processed in parallel so it is possible to quickly obtain the output vectors.

A scale & accumulator 140 (FIG. 1) may receive a partial sum as an input from each processing element 132 located at the end of each row within the systolic array structure. In this case, the scale & accumulator 140 may generate an output matrix corresponding to the output value by applying a scaling factor and an offset (O) to the corresponding partial sum, and may store the generated output matrix in an output buffer (Psum buffer) 150. That is, when applying the binary code quantization, it is necessary to perform operations such as Hadamard Product of the scaling factor and adding an offset after performing the matrix operations on the binary matrix and the input matrix, such that the corresponding operations can be performed by using the scale & accumulator 140.

In an example, it is also possible to implement the lookup table (L) by using a plurality of flip-flops (FF). That is, the lookup table generator 131 may set each flip-flop (FF) to output each operation result value corresponding to the key, and the processing element 132 may selectively receive an operation result value corresponding to the key of each operation result value input from the plurality of flip-flops (FFs) by using the multiplexer (M). For example, it is also possible for each read accumulate unit contained in the processing element 132 to selectively receive an operation result value corresponding to the key by using the multiplexer (M).

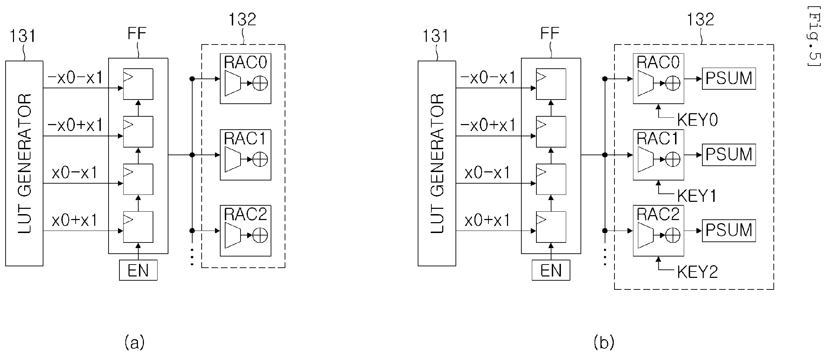

Specifically, referring to FIG. 5A, the lookup table generator 131 may generate a pair of a key and a value contained in each lookup table, may assign a key according to the location of each flip-flop (FF), and set each value (-x0 - x1, -x0 + x1, x0 - x1, x0 + x1) corresponding to the key to the flip-flop (FF) by inputting an enable signal (EN). In this case, each value may be stored in the flip-flop (FF), so it is possible to implement a lookup table through the plurality of flip-flops (FF).

Hereinafter, referring to FIG. 5B, the outputs of the plurality of flip-flops (FFs) may be provided to each of the connected processing elements 132, and may be provided to the read accumulate units (RAC0, RAC1, RAC2) in the corresponding processing element 132. Herein, the read accumulate units (RAC0, RAC1, RAC2) may include the multiplexer, and when the keys (key0, key1, key2) are input to the corresponding multiplexer, the operation result value corresponding to the key may be provided.

In this way, it is possible for the plurality of processing elements 132 and the read accumulate units (RAC0, RAC1, RAC2) in the corresponding processing elements 132 to receive the lookup table from the plurality of flip-flops (FFs). That is, since each lookup table stored in memory is not accessed to extract an operation result value, it is possible to prevent the occurrence of a memory bank conflict even when parallel processing is performed.

In addition, the lookup table generator 131 may generate a half lookup table instead of the full lookup table. That is, when applying the binary code quantization to have the binary weights of -1 or 1, a half lookup table corresponding to half of the number of all combinable cases may be generated and utilized by utilizing the symmetry of the lookup table. In this case, the size of the existing lookup table may be reduced by half, so it is possible to reduce the amount of memory utilized for the lookup table. Herein, the operation result values for the remaining half can be restored and provided in real time from the half lookup table.

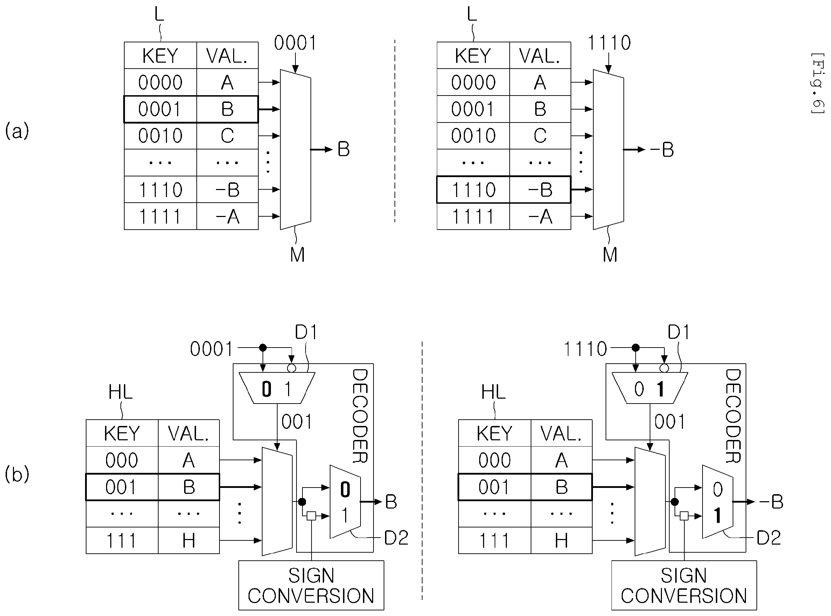

Specifically, referring to FIG. 6A, when using a general lookup table (L), B may be output as an operation result value when a key of 0001 is input, and -B may be output as an operation result value when a key of 1110 is input. In this case, the operation result values corresponding to all keys may be stored in the lookup table (L), but there may be a problem such as an increase in the size of the lookup table (L).

On the other hand, referring to FIG. 6B, a half lookup table (L) may be utilized, and in this case, the lookup table generator 131 may determine whether to restore the operation result value by checking the most significant bit (MSB) of the key input by the processing element 132. That is, as shown in FIG. 6B, when a key, 0001, with a most significant bit of 0 is input, the key corresponding to the remaining key 001 excluding the most significant bit may be included in the half lookup table (HL), so the corresponding operation result value B can be output. However, when the most significant bit is 1 like the key 1110, the corresponding key may not be included in the half lookup table, so it may be determined to perform the restoration.

Specifically, a converted key 001 may be generated by converting 110 excluding the most significant bit from the corresponding key 1110 (for example, performing a NOT operation), and an operation result value corresponding to the converted key 001 may be extracted from the half lookup table (HL). In this case, the operation result value -B may be finally output by converting the sign of the extracted operation result value. That is, it can be seen that the same operation result value -B as shown in FIG. 6B may be output even when the half lookup table (L) is utilized. In this way, when utilizing the half lookup table (L), it can be implemented to perform the same operation as the existing lookup table (L) while reducing memory usage by using only half of the existing lookup table (L).

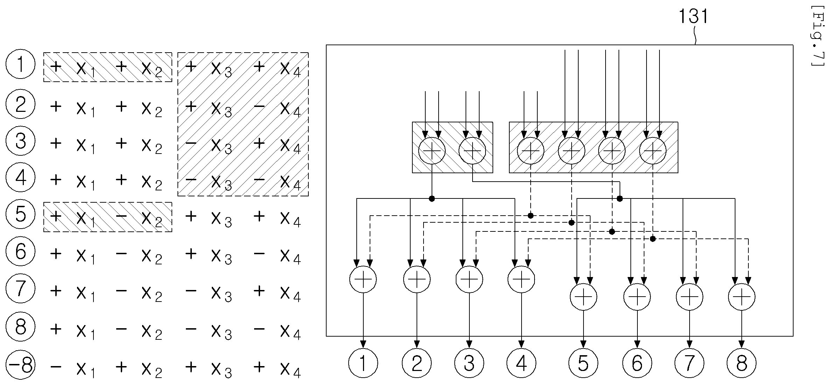

In addition, the lookup table generator 131 may apply additional algorithms to reduce repetitive operations when generating the lookup table, such as shown in FIG. 7.

Referring to FIG. 7, when the hyperparameter is 4, a lookup table can be generated to include $2^4 = 16$ operation result values, but half of them can be omitted by utilizing symmetry when a half lookup table is utilized. In addition, even when generating the operation results for the remaining 8 cases, it can be seen that the operation results of (x3 + x4), (x3 - x4), (-x3 + x4), and (-x3 - x4) are repeated twice each as shown in FIG. 7. Therefore, it can be implemented to be reused again after generating the operation results for (x3 + x4), (x3 - x4), (-x3 + x4), and (-x3 - x4) once. In the case of (x1 + x2) and (x1 - x2), each can be seen to repeat 4 times, so a data pipeline can be constructed to reuse the corresponding operation results for the remaining 3 times after one operation.

The present disclosure is not limited by the exemplary embodiments and the accompanying drawings described above. It will be apparent to those skilled in the art to which the present disclosure pertains that components according to the present disclosure can be substituted, modified, and changed within a scope without departing from the technical idea of the present disclosure.

**Claims**

1. A hardware accelerator (100) for a general matrix operation based on a lookup table, the accelerator comprising:

   a weight buffer (110) for storing at least a portion of a weight matrix containing a quantum weight of an integer where a weight of a target model is quantized;
   an input buffer (120) for storing at least a portion of an input matrix containing input activation values based on a floating point number with respect to the target model; and
   a matrix processing unit, MPU, (130) for performing a matrix operation between the weight matrix and the input matrix through communication with the weight buffer and the input buffer,
   wherein the matrix processing unit comprises:

   a lookup table generator (131) for obtaining each operation result value corresponding to the number of all cases that may occur when performing the matrix operation between the quantum weight and the input activation value, and for generating a lookup table containing the operation result value; and
   a plurality of processing elements, PE, (132) for generating a partial sum by extracting the operation result value corresponding to the quantum weight from the lookup table when performing the matrix operation.

2. The accelerator of claim 1, wherein the matrix processing unit (130) comprises a systolic array structure where the partial sum of the processing element is input to another processing element for data accumulation.

3. The accelerator of claim 1 or 2, when quantizing the weights of the target model based on binary code quantization, using a linear combination of q binary weights, each with an associated scale factor and offset, the weight buffer stores q binary matrices - each containing the binary weights - as the weight matrix.

4. The accelerator of claim 3, wherein the lookup table generator (131) divides each binary matrix into a sub-region containing a column of a hyperparameter, $\mu$, and generates each lookup table corresponding to the sub-region.

5. The accelerator of claim 4, wherein the lookup table generator (131) assigns each key corresponding to the number of all cases, $2^\mu$, combinable with the binary weight of the hyperparameter, $\mu$, produces as a value an operation result for the matrix operation between the binary weight of the hyperparameter corresponding to the key and the input matrix, and generates the lookup table from a pair of the key and the value.

6. The accelerator of claim 4 or 5, wherein the lookup table generator (131) is provided for each sub-region, and generates the lookup table corresponding to the sub-region when the input matrix is input from the input buffer (120).

7. The accelerator of any one of claims 4, 5 and 6, wherein the processing elements (132) assigned to the sub-region within the systolic array structure share the same lookup table when the lookup table is generated per sub-region.

8. The accelerator of any one of claim 5, 6 and 7, wherein the processing element (132) generates the key from a pattern of the binary weights of the hyperparameter in the binary matrix, and extracts the operation result value, the corresponding value, from the lookup table by using the key.

9. The accelerator any one of claims 5 to 8, wherein the processing element (132) further comprises a plurality of read accumulate units, RACs, (R1, R2, R3) corresponding to each row assigned to the processing element among the sub-regions.

10. The accelerator of claim 9, wherein the plurality of read accumulate units (R1, R2, R3) simultaneously access the lookup table assigned to the processing element, read the operation result value corresponding to the binary weight of the hyperparameter contained in the row from the lookup table, and generate each partial sum corresponding to the row in parallel.

11. The accelerator of any one of claims 5 to 10, wherein the lookup table generator (131) provides the lookup table to the plurality of processing elements (132) by using a plurality of flip-flops.

12. The accelerator of claim 11, wherein the lookup table generator (131) sets each flip-flop to output each operation result value corresponding to the key, and
the processing element (132) selectively receives by using a multiplexer the operation result value corresponding to the key of each operation result value input from the plurality of flip-flops.

13. The accelerator of any one of claims 5 to 12, wherein the lookup table generator (131) generates a half lookup table corresponding to half of the number of all cases combinable with the binary weight by utilizing symmetry when the binary weight is -1 or 1, and restores and provides in real time the operation result value for the remaining half from the half lookup table.

14. The accelerator of claim 13, wherein the lookup table generator (131) determines whether to restore by checking a most significant bit, MSB, of the key input by the processing element.

15. The accelerator of claim 14, wherein the lookup table generator (131) extracts the corresponding operation result value from the half lookup table in the case of the restoration by converting the key, and converts and provides a sign of the extracted operation result value.

[Fig.1]

[Fig.2]

(a)

(b)

[Fig.3]

$$y = x \times B_i$$

| $y_0$ | $y_1$ | $y_2$ | $y_3$ | y |

‖

| $x_0$ | $x_1$ | $\cdots$ | $x_7$ | x |

×

| 1 | 0 | 1 | 0 |
| 1 | 0 | 0 | 1 |
| 0 | 1 | 1 | 1 |
| 0 | 0 | 1 | 1 |
| 1 | 0 | 1 | 0 |
| 0 | 1 | 1 | 0 |
| 1 | 0 | 0 | 0 |
| 1 | 1 | 0 | 1 |

$B_i$

[Fig. 4]

EP 4 787 199 A1

[Fig.5]

[Fig.6]

(a)

(b)

[Fig.7]

## EUROPEAN SEARCH REPORT

**Application Number**

EP 25 17 8389

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2021/177617 A1 (SAMSUNG ELECTRONICS CO LTD [KR]) 10 September 2021 (2021-09-10) <br> * paragraph [0007] * <br> * paragraph [0053] * <br> * paragraph [0059] - paragraph [0069] * <br> * paragraph [0074] - paragraph [0075] * <br> * paragraph [0078] - paragraph [0080] * <br> * paragraph [0091] - paragraph [0094] * <br> * paragraph [0102] * <br> * paragraph [0112] * <br> * paragraph [0115] - paragraph [0117] * <br> * paragraph [0119] - paragraph [0121] * <br> * paragraph [0123] - paragraph [0124] * <br> * paragraph [0126] * <br> * paragraph [0128] * <br> ----- | 1-15 | INV. <br> G06F17/16 <br> G06F7/544 <br> G06N3/063 |
| A | US 2022/308833 A1 (MAJUMDER TURBO [US] ET AL) 29 September 2022 (2022-09-29) <br> * paragraph [0194] * <br> * paragraph [0196] * <br> * paragraph [0203] - paragraph [0247] * <br> ----- | 1-15 | |
| A | AHMED F ABOUELHAMAYED ET AL: "PQA: Exploring the Potential of Product Quantization in DNN Hardware Acceleration", <br> ARXIV.ORG, CORNELL UNIVERSITY LIBRARY, 201 OLIN LIBRARY CORNELL UNIVERSITY ITHACA, NY 14853, <br> 28 March 2024 (2024-03-28), XP091713872, <br> * sec. 5.3 * <br> ----- <br> -/-- | 1-15 | TECHNICAL FIELDS SEARCHED (IPC) <br><br> G06F <br> G06N |

The present search report has been drawn up for all claims

| Place of search | Date of completion of the search | Examiner |
|---|---|---|
| The Hague | 12 November 2025 | Karaliolios, N |

page 1 of 2

Europäisches
Patentamt

European
Patent Office

Office européen
des brevets

# EUROPEAN SEARCH REPORT

**Application Number**

EP 25 17 8389

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | PRAMOD KUMAR MEHER: "New look-up-table optimizations for memory-based multiplication", INTEGRATED CIRCUITS, ISIC '09. PROCEEDINGS OF THE 2009 12TH INTERNATIONAL SYMPOSIUM ON, IEEE, PISCATAWAY, NJ, USA, 14 December 2009 (2009-12-14), pages 663-666, XP031622691, ISBN: 978-981-08-2468-6 * abstract * * top; page 664, column 1 * | 1-5 | |
| A | US 12 153 898 B1 (KIM JUNSOO [KR] ET AL) 26 November 2024 (2024-11-26) * the whole document * | 1-15 | |
| A | CAMPAGNA A ET AL: "On parallelizing matrix multiplication by the column-row method", PROCEEDINGS OF THE WORKSHOP ON ALGORITHM ENGINEERING AND EXPERIMENTS 2013 SOCIETY FOR INDUSTRIAL AND APPLIED MATHEMATICS PUBLICATIONS USA, 2013, pages 122-132, XP002820549, DOI: 10.1137/1.9781611972931.11 * figure 1 * | 1-15 | TECHNICAL FIELDS SEARCHED (IPC) |

The present search report has been drawn up for all claims

| Place of search | Date of completion of the search | Examiner |
|---|---|---|
| The Hague | 12 November 2025 | Karaliolios, N |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 17 8389

This annex lists the patent family members relating to the patent documents cited in  the above-mentioned European search report.
The members are as contained in the European Patent Office EDP file on
The European Patent Office is in no way liable for these particulars which are merely given for the purpose of information.

12-11-2025

| Patent document cited in search report | Publication date | Patent family member(s) | Publication date |
|---|---|---|---|
| WO 2021177617 A1 | 10-09-2021 | KR 20210111014 A<br>US 2021271981 A1<br>WO 2021177617 A1 | 10-09-2021<br>02-09-2021<br>10-09-2021 |
| US 2022308833 A1 | 29-09-2022 | NONE | |
| US 12153898 B1 | 26-11-2024 | KR 102636314 B1<br>KR 20240176760 A<br>US 12153898 B1<br>WO 2024258070 A1 | 15-02-2024<br>24-12-2024<br>26-11-2024<br>19-12-2024 |

EPO FORM P0459

For more details about this annex : see Official Journal of the European Patent Office, No. 12/82

**EP 4 787 199 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020250013022